# FASCICULE DE BREVET EUROPEEN

(11) **EP 0 746 700 B1**
(45) Date de publication et mention de la délivrance du brevet: **10.03.1999**
(21) Numéro de dépôt: 95942758.4
(22) Date de dépôt: 18.12.1995
(51) Int. Cl.: F16F 15/129

(54) **DISPOSITIF D'AMORTISSEMENT DE TORSION**
DREHSCHWINGUNGSDÄMPFER
TORSION DAMPING DEVICE

(30) Priorité: 23.12.1994 FR 9415612
(43) Date de publication de la demande: 11.12.1996
(73) Titulaire: VALEO, 75017 Paris (FR)
(72) Inventeur: LEFEVRE, Gérard, F-80480 Saleux (FR)
(74) Mandataire: Gamonal, Didier
(86) Numéro de dépôt international: FR9501684
(87) Numéro de publication internationale: WO9620356

(56) Documents cités:
- DE-A- 4 304 778
- DE-C- 451 722
- FR-A- 2 365 728
- FR-A- 2 509 400
- FR-A- 2 532 019

## Description

La présente invention concerne un dispositif d'amortissement de torsion du genre comportant au moins deux parties coaxiales, montées rotatives l'une par rapport à l'autre, à l'encontre de moyens élastiques d'amortissement, généralement interposés circonférentiellement entre elles. Un tel dispositif d'amortissement de torsion peut s'appliquer à une friction d'embrayage, notamment pour véhicule automobile.

L'invention concerne plus particulièrement un dispositif de frottement intervenant entre lesdites parties coaxiales. Dans un dispositif d'amortissement de torsion, connu par le document DE-A-4 304 778 conforme au préambule de la revendication 1, l'une des parties rotatives porte un disque de friction, destiné à être solidarisé en rotation avec un premier arbre, en pratique un arbre menant, le vilebrequin du moteur dans le cas d'une application à un véhicule automobile, tandis qu'une autre desdites parties rotatives comporte un moyeu par lequel elle est destinée à être solidarisée en rotation avec un deuxième arbre, en pratique un arbre mené, l'arbre d'entrée d'une boîte de vitesses dans le cas concerné d'un tel véhicule automobile.

Dans un tel ensemble, il est également connu de mettre en oeuvre au moins trois parties coaxiales rotatives, l'une d'entre elles comprenant un voile de moyeu.

Le dispositif d'amortissement intervient entre cette partie rotative et celle solidarisée à l'arbre menant. La délimitation du débattement angulaire entre cette partie rotative et celle solidarisée à l'arbre mené est assurée par des moyens d'engrènement à jeu. Un sous-ensemble de préamortissement de torsion est généralement interposé entre ces deux dernières parties rotatives.

Il est aussi connu d'interposer entre deux parties coaxiales rotatives un dispositif de frottement à action axiale. Un tel dispositif comprend généralement une rondelle de frottement, dont une surface active frotte sur l'une des parties rotatives, et des moyens élastiques de charge sollicitant axialement ladite rondelle de frottement vers ladite partie rotative, en prenant appui sur l'autre partie rotative.

Dans le dispositif connu, mentionné plus haut, à trois parties coaxiales, deux dispositifs de frottement de ce genre sont généralement disposés, l'un, correspondant à l'amortisseur, entre la partie rotative liée à l'arbre menant et le voile de moyeu, et l'autre, correspondant au préamortisseur, entre la partie rotative liée à l'arbre menant et la partie rotative liée à l'arbre mené.

Ces dispositifs de frottement se trouvent au moins en partie à proximité du moyeu, dans un espace laissé libre autour de ce dernier, limité circonférentiellement par les moyens élastiques d'amortissement.

Dans cet espace est également logé le sous-ensemble de préamortissement de torsion.

Il est donc compliqué d'installer dans cet espace d'autres dispositifs actifs, tels que, par exemple, des dispositifs propres à amortir les chocs de fin de course des moyens d'engrènement à jeu.

La présente invention vise un dispositif permettant notamment d'éliminer cet inconvénient.

Conformément à l'invention ce problème est résolu par la partie caractérisante de la revendication 1.

De la sorte est libéré dans la zone délimitée par le moyeu, d'une part, et les moyens élastiques d'amortissement, d'autre part, l'espace occupé par la rondelle de frottement et par les moyens élastiques de charge correspondants.

Cet espace libéré peut être mis à profit, par exemple, pour installer, radialement à l'intérieur de la rondelle de frottement, une rondelle tiroir et sa charge propre, comme il sera mieux expliqué dans la description détaillée qui est donnée à titre d'exemple.

On appréciera que les rondelles de guidage sont inchangées.

Suivant un autre aspect de la présente invention, compte tenu du montage de la rondelle de frottement sur les entretoises, les moyens élastiques de charge de la rondelle de frottement sont constitués par des pattes élastiques découpées dans ladite rondelle. On évite ainsi d'avoir à disposer, comme c'est le cas dans les dispositifs amortisseurs cités plus haut, une rondelle élastique, telle que rondelle Belleville, adaptée à agir axialement sur la rondelle de frottement. Il y a donc réduction du nombre des pièces.

D'autres avantages de l'invention ressortiront d'ailleurs de la description qui va suivre, à titre d'exemple, en référence aux dessins sur lesquels:
- la figure 1 est une vue partielle en coupe d'un dispositif amortisseur de torsion suivant l'invention;
- la figure 2 est une vue en coupe d'une partie centrale de la figure 1, suivant la ligne II-II, avec des arrachements locaux;
- la figure 3 est une vue en perspective d'une rondelle de frottement participant au dispositif amortisseur de torsion suivant l'invention.

Ces figures illustrent à titre d'exemple l'application de l'invention à un dispositif amortisseur de torsion, qui, destiné à constituer une friction d'embrayage pour embrayage de véhicule automobile, comporte, successivement montées rotatives deux à deux les unes par rapport aux autres, trois parties coaxiales, à savoir, une partie A, constituée pour l'essentiel par un moyeu 10, une partie B, constituée pour l'essentiel par un voile de moyeu 11, qui entoure le moyeu 10, et une partie C, constituée pour l'essentiel par deux rondelles de guidage 12A et 12B, disposées de part et d'autre du voile de moyeu il et entourant le moyeu 10, solidarisées l'une à l'autre par des entretoises 9, d'orientation axiale et donc animées du même mouvement de rotation.

La partie coaxiale C porte un disque de friction 13, dont les garnitures de frottement sont destinées, de manière connue, à être serrées entre deux plateaux d'un embrayage liés en rotation à un arbre menant, l'arbre de sortie du moteur dans le cas concerné d'un véhicule automobile.

Le moyeu 10 présente quant à lui des cannelures intérieures 14, destinées à le solidariser à un arbre mené en rotation, l'arbre d'entrée de la boîte de vitesses associée, dans le cas d'un tel véhicule automobile.

Le moyeu 10 présente quant à lui des cannelures intérieures 14, destinées à le solidariser à un arbre mené en rotation, l'arbre d'entrée de la boîte de vitesses associée, dans le cas d'un tel véhicule automobile.

Le voile 11 est pourvu à sa périphérie externe d'échancrures 56, ouvertes vers l'extérieur et s'étendant circonférentiellement, adaptées à permettre le passage des entretoises 9 à jeu circonférentiel.

Les parties coaxiales B et C sont montées rotatives l'une par rapport à l'autre, à l'encontre de moyens élastiques interposés circonférentiellement entre elles.

Ces moyens élastiques sont constitués, dans la forme de réalisation représentée, par des paires de ressorts 15, 15a du type ressorts à boudin, les ressorts 15a se trouvant à l'intérieur des ressorts 15. Plus précisément, plusieurs paires de ressorts 15 et 15a sont régulièrement réparties autour de l'axe de rotation des parties B et C, s'étendant suivant des tangentes à un même cercle centré autour de cet axe.

De manière bien connue en soi, chaque paire de ressorts 15, 15a est montée dans des fenêtres 50, 51 pratiquées en vis-à-vis dans le voile 11 et les rondelles de guidage 12A et 12B.

L'ensemble constitué par les parties coaxiales B, C et les groupes de ressorts 15, 15a constitue le dispositif d'amortissement principal de la friction d'embrayage.

Son fonctionnement, bien connu par lui-même, ne sera pas décrit plus en détail et ne relève pas de la présente invention.

Les parties coaxiales A et B sont elles aussi montées rotatives l'une par rapport à l'autre, à l'encontre de moyens élastiques de préamortissement, dans les limites d'un débattement angulaire détermine par des moyens d'engrènement à jeu 16.

En pratique, le moyeu 10 présente sur une portion longitudinale 17 de sa périphérie externe des saillies radiales 18 formant une denture mâle. Le voile de moyeu 11 présente quant à lui, à sa périphérie interne, en regard de la portion 17 du moyeu 10, des échancrures 19, d'ouverture angulaire supérieure à celle des dents du moyeu, formant ainsi une denture femelle, ici de forme trapézoïdale comme la denture mâle complémentaire 18. Une dent 18 est engagée à jeu circonférentiel dans chaque échancrure 19, le débattement angulaire possible entre les parties coaxiales A et B se trouvant ainsi limité par venue en butée des dents 18 du moyeu 10 avec les flans correspondants des échancrures 19 du voile 11. Ces dents et échancrures constituent ainsi les moyens d'engrènement à jeu 16 précités.

Le dispositif est complété par un sous-ensemble de préamortissement comprenant notamment une cassette de préamortissement de type connu agencée entre le voile de moyeu il et le moyeu 10.

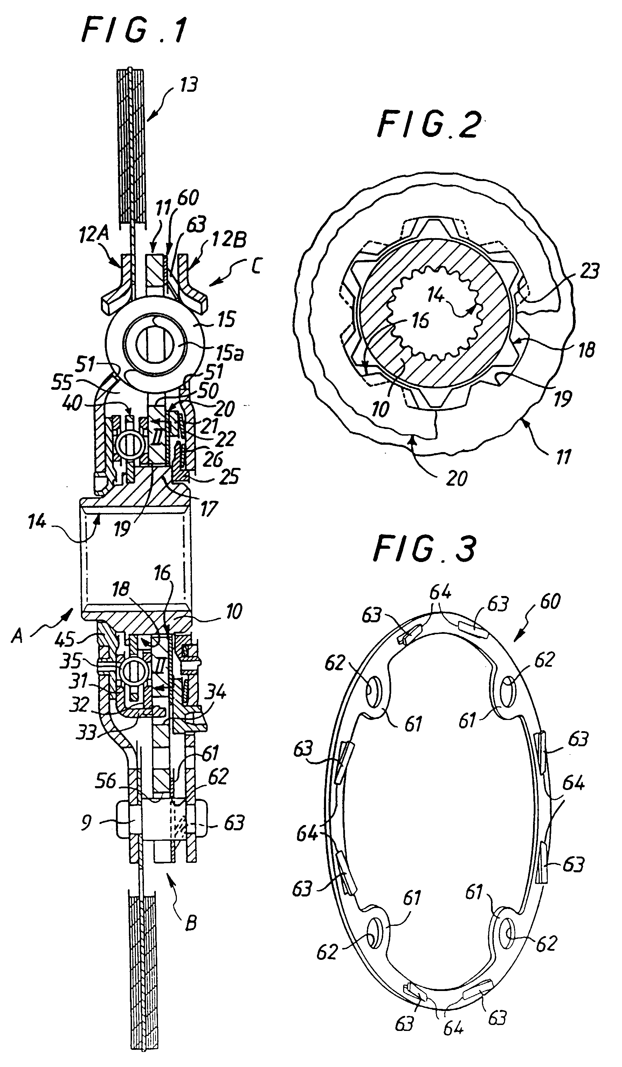

Comme on le voit sur la figure 1, cette cassette, de même axe que les parties rotatives A,B et C, est logée à la faveur d'un espace libre 55, se trouvant radialement entre le moyeu 10 et les paires de ressorts 15,15a. Axialement, cette cassette se trouve dans la partie de l'espace libre 55 située entre le voile 11 et la rondelle de guidage 12A.

Elle est constituée par un voile secondaire 40 solidaire par sertissage du moyeu, et par deux flasques 31 et 32 situés de part et d'autre du voile secondaire 40 et raccordés au voile de moyeu 11 par des doigts 33. Plus précisément, ces doigts 33, qui, issus du flasque 31 métallique, permettent, par encliquetage, une liaison entre les deux flasques 31, 32, sont engagés dans des ouvertures 34 du voile de moyeu 11, de sorte que les flasques 31 et 32 sont entraînés en rotation avec le voile de moyeu 11. Des moyens élastiques de préamortissement 35 à action circonférentielle, en pratique des ressorts de plus faible raideur que les ressorts 15, 15a, sont intercalés entre les flasques 31, 32, d'une part et le voile secondaire 40, d'autre part, selon une disposition classique. Ils sont donc sollicités élastiquement par une rotation relative du voile de moyeu 11 et du moyeu 10 et tendent à s'opposer à cette rotation. Une rondelle de frottement peut être intercalée entre la cassette de préamortissement et le voile de moyeu 11.

Le fonctionnement d'une telle cassette de préamortissement est connu en soi et ne sera pas décrit plus en détail.

Pour mémoire, on rappellera que, dans une première phase, les ressorts de préamortissement 35 sont comprimés, les rondelles de guidage 12A,12B et le voile 11 formant un ensemble rigide par l'intermédiaire des paires de ressorts d'amortissement 15,15a, plus raides, ce mouvement se poursuivant jusqu'à annulation du jeu des moyens d'engrènement à jeu 16. Après, les ressorts de préamortissement 35 restent bandés et un mouvement relatif se produit entre le voile 11 et les rondelles de guidage avec intervention des paires de ressorts d'amortissement 15,15a.

Selon une caractéristique importante de l'invention, le dispositif amortisseur de torsion comprend également un dispositif de frottement intervenant axialement entre les ensembles rotatifs coaxiaux B et C, agissant en parallèle avec les moyens élastiques d'amortissement.

Ce dispositif de frottement comprend une rondelle 60, représentée isolement à la figure 3.

Cette rondelle de frottement 60, ici métallique, est de forme sensiblement annulaire, de grand diamètre intérieur. Plus précisément, elle comprend une partie active de forme annulaire avec, s'étendant vers l'intérieur, des bras radiaux 61 formant moyens de liaison avec les entretoises 9 de liaison entre les rondelles de guidage 12A et 12B.

En pratique, chaque bras radial 61, de forme arrondie, comporte un alésage 62 adapté à être traversé par une entretoise 9, comme on le voit sur la figure 1.

Ainsi liée aux entretoises 9, la rondelle 60 est maintenue centrée et immobilisée en rotation par rapport à l'ensemble rotatif C. Elle peut en revanche se déplacer axialement par coulissement le long des entretoises 9.

Comme on le voit bien sur la figure 1, le diamètre intérieur de la rondelle 60 est suffisamment important pour que sa partie active soit située radialement au delà des paires de ressorts 15, 15a. Elle intervient donc à proximité de la périphérie externe du voile de moyeu 11.

La rondelle est positionnée axialement entre le voile 11, contre lequel sa partie active est en contact, et la rondelle de guidage 12B.

Sur la partie active de cette rondelle sont découpées des pattes 63, de formes rectangulaires. Chacune de ces pattes s'étend approximativement circonférentiellement à partir d'un côté radial 64 de liaison avec la partie active de la rondelle. Ces pattes interviennent à intervalle régulier tout autour de la rondelle, par paires de deux disposées dos à dos, c'est à dire leurs côtés 64 se trouvant en regard l'un de l'autre.

Avantageusement, et comme représenté sur la figure 3, une paire de pattes 63 intervient dans chaque quartier de la rondelle s'étendant entre deux entretoises 9.

Ces pattes sont embouties de manière à être inclinées vers la rondelle de guidage 12B. Leurs extrémités portant sur la surface intérieur de la rondelle de guidage 12B, radialement au delà des fenêtres 51, ces pattes constituent des moyens élastiques de charge adaptés à solliciter axialement la rondelle de frottement 60 contre le voile 11 et à serrer la cassette entre la rondelle de guidage 12A et le voile.

Dans le plan de la rondelle 60, radialement à l'intérieur de cette dernière, dans l'espace libre 55 entre le moyeu 10 et les ressorts 15,15a, est installée une rondelle d'amortissement de choc de fin de course 20 dite rondelle tiroir, coaxiale au voile de moyeu 11 et accolée à ce dernier du côté opposé à la cassette de préamortissement.

Cette rondelle tiroir 20 comporte sur sa circonférence intérieure une denture femelle 23, en regard des dents 18 de la denture mâle du moyeu 10, analogue à celle du voile de moyeu 11 mais présentant des échancrures 23 moins larges que les échancrures 19 constituées sur le voile de moyeu 11. Une dent 18 du moyeu 10 est engagée dans chaque échancrure 23 de la rondelle tiroir 20, constituant un moyen d'engrènement à jeu entre ladite rondelle tiroir et ledit moyeu 10.

La rondelle tiroir 20 est sollicitée axialement contre la surface du voile 11 par un moyen élastique de charge à action axiale comprenant une rondelle Belleville 22, intercalée sous contrainte entre la rondelle de guidage 12B et une rondelle d'application 21, calée en rotation sur la rondelle 12B par des pions engagés dans des trous de cette dernière.

Ainsi chargée, la rondelle tiroir 20 est adaptée à frotter contre le voile 11.

Lorsque le voile de moyeu 11 et le moyeu 10 sont animés d'un mouvement angulaire l'un par rapport à l'autre, les dents 18 se déplacent dans les échancrures 19 et 23. Les échancrures 23 étant moins larges que les échancrures 19, le contact entre les dents 18 du moyeu 10 et les échancrures 23 se produit avant l'engagement entre les dents 18 et les flans des échancrures 19.

La rondelle 20, immobilisée par rapport au moyeu 10, va alors frotter contre le voile 11, freinant le mouvement angulaire de ce dernier par rapport audit moyeu.

De cette manière, la force du choc des dents 18 contre les flans des échancrures 19 du voile 11 peut être réduite.

Les paramètres déterminant le freinage obtenu par cette rondelle tiroir, c'est à dire le coefficient de frottement de la rondelle tiroir 20 et sa charge, en pratique déterminé par le choix de la rondelle élastique 22, peuvent être réglés indépendamment du dispositif de frottement 60 intervenant entre les ensembles coaxiaux B et C.

Dans l'exemple de réalisation représenté à la figure 1, radialement à l'intérieur des moyens de charge 21 et 22 de la rondelle tiroir 20 est installé un dispositif de frottement intervenant en parallèle avec les moyens élastiques de préamortissement.

Ce dispositif comprend une rondelle de frottement 25 qui, calée en rotation sur la rondelle de guidage 12B par des pions engagés dans des trous de cette dernière, est sollicitée axialement contre le moyeu 10 par une rondelle Belleville 26 intercalée sous contrainte entre elle et ladite rondelle de guidage 12B.

Un palier conique 45, lié en rotation à la rondelle de guidage 12A par des pions engagés dans des trous de cette dernière, est interposé radialement entre la rondelle de guidage 12A et une portée conique du moyeu 10. Axialement, ce palier 45 est interposé entre la rondelle de guidage 12 et le flasque 31. Le palier 45 permet donc un centrage des rondelles de guidage 12A, 12B par rapport au moyeu 10 tout en évitant un frottement métal sur métal entre le flasque 31 et la rondelle de guidage 12A.

Bien entendu, le disque 13 peut être dépourvu de garnitures de frottement et être fixé directement sur un plateau solidaire du vilebrequin du moteur du véhicule.

La cassette peut être dotée de flasques 30, 31 en matière plastique.

Enfin, la limitation du débattement angulaire relatif entre le disque 13 et l'ensemble formé par le moyeu 17 et le voile 11 peut être réalisé par venue à spires jointives des ressorts 15, 15a. Dans ce cas, les entretoises 9 peuvent alors s'étendre radialement au-delà du voile. Les moyens de liaison 61 de la rondelle 60 seront alors décalés radialement vers l'extérieur par rapport à la partie active de celle-ci.

Dans tous les cas, la partie active de la rondelle 60 est implantée à proximité de la périphérie externe du voile 11, en sorte que l'on obtient des couples de frottement élevés.

Cette rondelle 60, robuste, avantageusement en matière métallique, sachant qu'un contact métal sur métal est préférable du point de vue coefficient de frottement, mais peut être également en matière plastique renforcé de fibres.

## Revendications

1. Dispositif amortisseur de torsion, notamment pour embrayage de véhicule automobile, comportant deux parties coaxiales (B et C) montées rotatives l'une par rapport à l'autre, à l'encontre de moyens élastiques d'amortissement (15,15a), interposés circonférentiellement entre elles, et d'un dispositif de frottement à action axiale, ce dernier comprenant une rondelle de frottement (60) soumise à l'action axiale de moyens élastiques de charge (63) prenant appui sur l'une (C) des deux parties coaxiales (B et C) pour solliciter axialement la rondelle de frottement (60) vers l'autre (B) des deux parties coaxiales (B et C), dans lequel ladite rondelle de frottement (60) a une forme sensiblement annulaire, de grand diamètre, de façon à intervenir radialement au delà des moyens élastiques d'amortissement (15,15a), et dans lequel l'une (B) desdites parties coaxiales comporte un voile de moyeu (11), tandis que l'autre (C) desdites parties coaxiales comporte deux rondelles de guidage (12A, 12B) disposées de part et d'autre du voile de moyeu (11) et solidarisées l'une à l'autre par des entretoises (9) d'orientation axiale implantées à la périphérie externe du voile de moyeu (11), caractérisé en ce que la rondelle de frottement (60) est montée coulissante sur les entretoises (9) de sorte qu'elle est immobilisée en rotation par rapport aux rondelles de guidage (12A, 12B), en ce que la rondelle de frottement (60) a un grand diamètre intérieur de façon qu'elle s'étend au-delà des moyens élastiques d'amortissement (15,15a) et présente une partie active en contact avec le voile de moyeu (11) et en ce que les moyens élastiques de charge (63) prennent appui sur l'une (12B) des deux rondelles de guidage (12A, 12B), dite première rondelle de guidage (12B), pour solliciter axialement la partie active de la rondelle de frottement (60) contre le voile (11).

2. Dispositif amortisseur de torsion selon la revendication 1, caractérisé en ce que les moyens élastiques de charge (63) portent sur la première rondelle de guidage (12B) radialement au dessus des moyens élastiques d'amortissement (15a, 15b).

3. Dispositif amortisseur de torsion suivant la revendication 1 ou 2, caractérisé en ce que les moyens élastiques de charge (63) de la rondelle de frottement (60) sont constitués par des pattes élastiques découpées dans la partie active de forme annulaire de ladite rondelle (60).

4. Dispositif amortisseur de torsion selon la revendication 3, caractérisé en ce que les pattes (63) sont globalement d'orientation circonférentielle et sont inclinées vers la première rondelle de guidage (12B) pour porter sur celle-ci radialement au delà de fenêtres (51) de logement de ressorts (15, 15a) constituant les moyens élastiques d'amortissement (15, 15a).

5. Dispositif amortisseur de torsion suivant l'une quelconque des revendications 1 à 4, caractérisé en ce que la rondelle de frottement (60) est pourvue de moyens (61) de liaison avec les entretoises (9), décalés radialement par rapport à la partie active de cette rondelle.

6. Dispositif amortisseur de torsion selon la revendication 5, caractérisé en ce que les moyens de liaison (61) consistent en des bras (61) radiaux, chaque bras radial ayant un alésage (62) traversé par une entretoise (9).

7. Dispositif amortisseur de torsion suivant l'une quelconque des revendications 1 à 6, caractérisé en ce qu'une rondelle tiroir (20) à denture est installée dans le plan de la rondelle de frottement (60), radialement à l'intérieur de cette dernière.

8. Dispositif amortisseur de torsion selon la revendication 7, caractérisé en ce que des moyens élastiques de charge (21, 22) prennent appui sur la première rondelle de guidage (12B) pour solliciter la rondelle tiroir (20) axialement contre le voile de moyeu (11) et en ce que la denture (23) de la rondelle tiroir est du type femelle pour engrener avec jeu avec la denture mâle (18) que présente à sa périphérie externe un moyen (10), ladite denture mâle du moyeu (10) engrenant avec un jeu avec une denture femelle formé à la périphérie interne du voile de moyeu (11), ledit jeu étant inférieur à celui prévu entre les dentures (18, 23) du moyeu (10) et du voile de moyeu (11).

9. Dispositif amortisseur de torsion suivant la revendication 8, caractérisé en ce qu'il comprend des moyens élastiques de préamortissement (35) interposés entre ledit moyeu et ledit voile, en ce que lesdits moyens élastiques de préamortissement se trouvent axialement entre ledit voile (11) et l'autre desdites rondelles de guidage (12A), tandis que la rondelle tiroir à denture (20) se trouve axialement entre ledit voile et la première rondelle de guidage (12B) et en ce qu'il comprend en outre un dispositif de frottement (25,26) associé au préamortisseur, ce dispositif se trouvant radialement à l'intérieur des moyens élastiques de charge (21,22) de la rondelle tiroir (60) et axialement entre la première rondelle de guidage (12B) et le voile de moyeu (11).

10. Dispositif amortisseur de torsion selon l'une quelconque des revendications 1 à 9, caractérisé en ce que la rondelle de frottement (60) est métallique.

## Patentansprüche

1. Drehschwingungsdämpfervorrichtung, insbesondere für eine Kraftfahrzeugkupplung, umfassend zwei koaxiale Teile (B und C), die im Verhältnis zueinander drehbar entgegen umfangsmäßig ziwschen ihnen eingefügten elastischen Dämpfungsmitteln (15, 15a) und einer axial wirksamen Reibungsvorrichtung gelagert sind, wobei letztere eine Reibscheibe (60) umfaßt, die der axialen Wirkung von elastischen Beanspruchungsmitteln (63) ausgesetzt ist, die auf einem (C) der zwei koaxialen Teile (B und C) zur Auflage kommen, um die Reibscheibe (60) axial zu dem anderen (B) der zwei koaxialen Teile (B und C) zu beaufschlagen, wobei die besagte Reibscheibe (60) in etwa ringförmig mit großem Durchmesser ausgeführt ist, so daß sie radial jenseits der elastischen Dämpfungsmittel (15, 15a) wirksam wird, und wobei einer (B) der besagten koaxialen Teile eine Nabenscheibe (11) umfaßt, während der andere (C) der besagten koaxialen Teile zwei Führungsscheiben (12A, 12B) umfaßt, die beiderseits der Nabenscheibe (11) angeordnet und durch axial ausgerichtete, am äußeren Rand der Nabenscheibe (11) angebrachte Streben (9) fest miteinander verbunden sind, **dadurch gekennzeichnet,** daß die Reibscheibe (60) gleitend verschiebbar auf den Streben (9) gelagert ist, so daß sie gegen Verdrehung im Verhältnis zu den Führungsscheiben (12A, 12B) gesichert ist, daß die Reibscheibe (60) einen großen Innendurchmesser hat, so daß sie sich jenseits der elastischen Dämpfungsmittel (15, 15a) erstreckt und einen Wirkteil aufweist, der mit der Nabenscheibe (11) in Kontakt steht, und daß die elastischen Beanspruchungsmittel (63) auf einer (12B) der zwei Führungsscheiben (12A, 12B), die als erste Führungsscheibe (12B) bezeichnet wird, zur Auflage kommen, um den Wirkteil der Reibscheibe (60) axial gegen die Nabenscheibe (11) zu beaufschlagen.

2. Drehschwingungsdämpfervorrichtung nach Anspruch 1, **dadurch gekennzeichnet,** daß die elastischen Beanspruchungsmittel (63) auf der ersten Führungsscheibe (12B) radial oberhalb der elastischen Dämpfungsmittel (15a, 15b) aufliegen.

3. Drehschwingungsdämpfervorrichtung nach Anspruch 1 oder 2, **dadurch gekennzeichnet,** daß die elastischen Beanspruchungsmittel (63) der Reibscheibe (60) aus elastischen Ansätzen bestehen, die in dem ringförmigen Wirkteil der besagten Reibscheibe (60) ausgestanzt sind.

4. Drehschwingungsdämpfervorrichtung nach Anspruch 3, **dadurch gekennzeichnet,**, daß die Ansätze (63) insgesamt umfangsmäßig ausgerichtet und zur ersten Führungsscheibe (12B) geneigt sind, um auf dieser radial jenseits von Fenstern (51) zur Aufnahme von Federn (15, 15a) aufzuliegen, die die elastischen Dämpfungsmittel (15, 15a) bilden.

5. Drehschwingungsdämpfervorrichtung nach einem der Ansprüche 1 bis 4 , **dadurch gekennzeichnet,** daß die Reibscheibe (60) mit Mitteln (61) zur Verbindung mit den Streben (9) versehen ist, die im Verhältnis zum Wirkteil dieser Reibscheibe radial versetzt sind.

6. Drehschwingungsdämpfervorrichtung nach Anspruch 5, **dadurch gekennzeichnet**, daß die Verbindungsmittel (61) aus radialen Armen (61) bestehen, wobei jeder radiale Arm eine Bohrung (62) hat, durch die eine Strebe (9) hindurchgeht.

7. Drehschwingungsdämpfervorrichtung nach einem der Ansprüche 1 bis 6, **dadurch gekennzeichnet,** daß eine Einschubscheibe (20) mit einer Zahnung in der Ebene der Reibscheibe (60), radial im Innern dieser Reibscheibe, angeordnet ist.

8. Drehschwingungsdämpfervorrichtung nach Anspruch 7, **dadurch gekennzeichnet,** daß elastische Beanspruchungsmittel (21, 22) auf der ersten Führungsscheibe (12B) zur Auflage kommen, um die Einschubscheibe (20) axial gegen die Nabenscheibe (11) zu beaufschlagen, und daß die Zahnung (23) der Einschubscheibe als Aufnahmezahnung ausgeführt ist, um mit Spiel mit der vorstehenden Zahnung (18) in Eingriff zu kommen, die eine Nabe (10) an ihrem äußeren Rand aufweist, wobei die besagte vorstehende Zahnung der Nabe (10) mit einem Spiel mit der am inneren Rand der Nabenscheibe (11) ausgebildeten Aufnahmezahnung in Eingriff kommt, wobei das besagte Spiel kleiner als das zwischen den Zahnungen (18, 23) der Nabe (10) und der Nabenscheibe (11) vorgesehene Spiel ist.

9. Drehschwingungsdämpfervorrichtung nach Anspruch 8, **dadurch gekennzeichnet,** daß sie elastische Vordämpfungsmittel (35) umfaßt, die zwischen der besagten Nabe und der besagten Nabenscheibe eingefügt sind, daß sich die besagten elastischen Vordämpfungsmittel axial zwischen der besagten Nabenscheibe (11) und der anderen der besagten Führungsscheiben (12A) befinden, während sich die Einschubzahnscheibe (20) axial zwischen der besagten Nabenscheibe und der ersten Führungsscheibe (12A) befindet, und daß sie außerdem eine mit dem Vordämpfer verbundene Reibungsvorrichtung (25, 26) umfaßt, wobei sich diese Vorrichtung radial im Innern der elastischen Beanspruchungsmittel (21, 22) der Einschubscheibe (60) und axial zwischen der ersten Führungsscheibe (12B) und der Nabenscheibe (11) befindet.

10. Drehschwingungsdämpfervorrichtung nach einem der Ansprüche 1 bis 9 , **dadurch gekennzeichnet,** daß die Reibscheibe (60) aus Metall ausgeführt ist.

## Claims

1. Torsion damping device, notably for a motor vehicle clutch, having two coaxial parts (B and C) mounted so as to rotate with respect to each other, counter to elastic damping means (15, 15a) interposed circumferentially between them, and an axially acting friction device, the latter comprising a friction washer (60) subjected to the axial action of elastic load means (63) bearing on one (C) of the two coaxial parts (B and C) in order to axially force the friction washer (60) towards the other one (B) of the two coaxial parts (B and C), in which the said friction washer (60) has a substantially annular shape, of large diameter, so as to act radially beyond the elastic damping means (15, 15a), and in which one (B) of the said coaxial parts has a hub body (11), whilst the other one (C) of the said coaxial parts has two guidance washers (12A, 12B) disposed on each side of the hub body (11) and fixed to each other by axially oriented ties (9) located at the external periphery of the hub body (11), characterised in that the friction washer (60) is mounted so as to slide on the ties (9) so that it is immobilised with respect to rotation with respect to the two guidance washers (12A, 12B), in that the friction washer (60) has a large inside diameter so that it extends beyond the elastic damping means (15, 15a) and has an active part in contact with the hub body (11), and in that the elastic load means (63) bear on one (12B) of the two guidance washers (12A, 12B), referred to as the first guidance washer (12B), in order to axially force the active part of the friction washer (60) against the body (11).

2. Torsion damping device according to Claim 1, characterised in that the elastic load means (63) bear on the first guidance washer (12B) radially above the elastic damping means (15a, 15b).

3. Torsion damping device according to Claim 1 or 2, characterised in that the elastic load means (63) of the friction washer (60) consist of elastic lugs cut in the annular shaped active part of the said washer (60).

4. Torsion damping device according to Claim 3, characterised in that the lugs (63) are roughly circumferentially oriented and are inclined towards the first guidance washer (12B) in order to bear on the latter radially beyond apertures (51) housing springs (15, 15a) constituting the elastic damping means (15, 15a).

5. Torsion damping device according to any one of Claims 1 to 4, characterised in that the friction washer (60) is provided with means (61) of connection with the ties (9), offset radially with respect to the active part of this washer.

6. Torsion damping device according to Claim 5, characterised in that the connection means (61) consist of radial arms (61), each radial arm having a bore (62) with a tie (9) passing through it.

7. Torsion damping device according to any one of Claims 1 to 6, characterised in that a toothed slide washer (20) is installed in the plane of the friction washer (60), radially inside the latter.

8. Torsion damping device according to Claim 7, characterised in that the elastic load means (21, 22) bear on the first guidance washer (12B) in order to push the slide washer (20) axially against the hub body (11) and in that the teeth (23) on the slide washer are of the female type for meshing with clearance with the male teeth (18) which a hub (10) has at its external periphery, the said male teeth on the hub (10) meshing with clearance with female teeth formed at the internal periphery on the hub body (11), the said clearance being less than that provided between the teeth (18, 23) on the hub (10) and hub body (11).

9. Torsion damping device according to Claim 8, characterised in that it comprises elastic predamping means (35) interposed between the said hub and the said body, and in that the said elastic predamping means are situated axially between the said body (11) and the other one of the said guidance washers (12A), whilst the toothed slide washer (20) is situated axially between the said body and the first guidance washer (12B), and in that it also comprises a friction device (25, 26) associated with the predamper, this device being situated radially inside the elastic load means (21, 22) of the slide washer (60) and axially between the first guidance washer (12B) and the hub body (11).

10. Torsion damping device according to any one of Claims 1 to 9, characterised in that the friction washer (60) is metallic.
